# EUROPEAN PATENT SPECIFICATION

(11) **EP 2 738 047 B1**
(45) Date of publication and mention of the grant of the patent: **06.04.2016**
(21) Application number: 12819457.8
(22) Date of filing: 08.05.2012
(51) Int. Cl.: B60R 19/50, B60R 19/12, B60R 19/18, B60R 19/24

(54) **VEHICLE FRONT SECTION STRUCTURE**
AUFBAU EINES FAHRZEUGFRONTTEILS
STRUCTURE DE SECTION AVANT DE VÉHICULE

(30) Priority: 30.07.2011 JP 2011167868
(43) Date of publication of application: 04.06.2014
(73) Proprietor: Honda Motor Co., Ltd., Minato-ku Tokyo 107-8556 (JP)
(72) Inventor: KIKUCHI, YUJI, Wako-shi Saitama 351-0193 (JP); KASHIWASE, Yuta, Wako-shi Saitama 351-0193 (JP); KASHIWAZAKI, Dai, Wako-shi Saitama 351-0193 (JP)
(74) Representative: Weickmann & Weickmann
(86) International application number: PCT/JP2012/061732
(87) International publication number: WO 2013/018409

(56) References cited:
- EP-A2- 1 977 957
- JP-A- 4 143 140
- JP-A- 4 159 156
- JP-A- 5 278 539
- JP-A- 2008 094 234
- US-A- 3 869 165
- US-A- 4 466 646

## Description

### Technical Field

The present invention relates to a vehicle body front structure having left and right laterally spaced front side frames, and left and right front upper members disposed laterally outwardly of the respective front side frames, and a bumper face disposed forwardly of the left and right front upper members.

### Background Art

A known vehicle body front structure includes an upper impact absorption member disposed on a front surface of a bumper beam, a lower impact absorption member disposed on a front surface of a lower frame, and a bumper face disposed forwardly of the upper and lower impact absorption members.

As for the vehicle body front structure, when the bumper face impacts on an object, an impact load is applied from a front side of a vehicle body to the bumper face. The bumper face deforms rearwardly of the vehicle body due to the impact load and then abuts on the upper and lower impact absorption members. The abutment of the bumper face on the upper and lower impact absorption members transmits the impact load to the upper and lower impact absorption members, such that the upper and lower impact absorption members are compressed (crushed) bearing the impact load.

The impact load borne by the upper and lower impact absorption members is dispersed over the entire area of the upper and lower impact absorption members. The dispersion of the impact load to the upper and lower impact absorption members mitigates the impact of the bumper face on the object, thereby protecting the object from the impact (for example, patent literature 1 below).

A vehicle body front structure according to the preamble of claim 1 is known from JP 20111051463.

### Priort Art Literature

### Patent Literature:

Patent Literature 1: JP-A-2005-297726

### SUMMARY OF INVENTION

### Technical Problem

Some vehicle body front structure has a fog light (hereinafter referred to as a lighting portion) disposed in a bumper face. The lighting portion is difficult to deform, as compared to the bumper face. When the bumper face impacts on an object, the bumper face may deform or depressed only at the surroundings of the lighting portion in such a manner as to allow the lighting portion to protrude beyond the surroundings. Under this condition, it is difficult to disperse the impact load to the surroundings of the lighting portion and hence mitigate the impact on the object.

To solve this problem, it is proposed that the surroundings be beforehand offset forwardly from the lighting portion such that the surroundings can deform or depressed due to the impact load and then stop at generally the same location as the lighting portion.

This makes it possible to disperse the impact load over the entire area of the deformed surroundings so as to mitigate the impact on the object. However, in order to disperse the impact load over the entire area of the deformed surroundings, the surroundings must be beforehand disposed to be offset forwardly from the lighting portion.

It is an object of the present invention is to provide a vehicle body front structure configured to disperse the impact load applied from a front side of a vehicle to the bumper face without requiring the surrounding of the lighting portion to be beforehand offset forwardly from the lighting portion.

### Solution to Problem

According to one aspect of the present invention, as defined in claim 1, there is provided a vehicle body front structure.

Preferably, as defined in claim 2, the upper absorption member and the lower impact absorption member are compressively deformable in the same manner as a lighting garnish defining a contour of the lighting portion, due to the impact load applied from the front side of the vehicle body, the upper impact absorption member and the lower impact absorption member are box-shaped and made of the same kind of resin as the lighting garnish.

Preferably, as defined in claim 3, the upper impact absorption member is disposed between the front connection portion and the bumper face, and the lower impact absorption member is disposed between the lower bulk member and the bumper face.

Preferably, as defined in claim 4, the upper impact absorption member and the bumper face define an upper gap therebetween, the lower impact absorption member and the bumper face define a lower gap therebetween, and the lighting garnish and each of the front curved sections define a lighting gap therebetween for allowing the lighting portion to move rearwardly of the vehicle body, and wherein the lighting gap extends longitudinally of the vehicle body by the same distance as the upper gap and the lower gap.

Preferably, as defined in claim 5, each of the upper impact absorption member and the lower impact absorption member is box-shaped and has an open side facing the bumper face, each of the upper impact absorption member and the lower impact absorption member comprising a generally rectangular sidewall portion and a bottom portion disposed opposite the bumper face, and, when the bumper face deforms due to the impact load applied from the front side of the vehicle body, the deformed bumper face abuts each of the upper impact absorption member and the lower impact absorption member to close the open side of each of the upper impact absorption member and the lower impact absorption member.

Preferably, as defined in claim 6, the lighting garnish has an overlapping part aligned with each of the front curved sections longitudinally of the vehicle body, the lighting garnish having garnish ribs in the overlapping part.

Preferably, as defined in claim 7, the upper impact absorption member has a lateral outer half and the lower impact absorption member is disposed below the lateral outer half of the upper impact absorption member, the upper impact absorption member has a lateral inner half and the lower bulk member includes a support part located adjacent the lower impact absorption member and below the lateral inner half, and the support part has a front surface and the lower impact absorption member has a front surface, the front surface of the support part and the front surface of the lower impact absorption member being arranged in generally the same location longitudinally of the vehicle body.

### Advantageous Effects of Invention

As defined in claim 1, the front connection portion interconnects each of the front curved sections of the front upper members and each of the front end portions of the front side frames, and the upper impact absorption member is disposed on the front connection portion. Below the front connection portion, the lower bulk member is connected to the lower end portions of the front curved sections. The lower impact absorption member is disposed on the lower bulk member. The lighting portion (e.g., a fog light) is disposed between the front connection portion and the lower bulk member such that the lighting portion is located between the upper and lower impact absorption members.

When the bumper face collides with an object and an impact load is applied from the front side of the vehicle body to the bumper face, the upper and lower impact absorption members prevent deformation of the bumper face, such that upper and lower parts of the bumper face located above and below the lighting portion stop at a position generally flush with the lighting portion. By the upper and lower parts of the bumper face stopping at the position generally flush with the lighting portion, the upper and lower parts of the bumper face and the lighting portion bear the impact load.

Since the upper and lower parts of the bumper face and the lighting portion bear the impact load, the impact load is dispersed over the entire area of the upper and lower parts of the bumper face and the lighting portion. As a result, unlike the prior art, it becomes possible to disperse the impact load without allowing the surroundings of the lighting portion to protrude forwardly beyond the lighting portion. The dispersion of the impact load over the entire area of the upper and lower parts of the bumper face and the lighting portion mitigates the impact of the bumper face on the object, thereby protecting the object from the impact.

As defined in claim 2, the upper and lower impact absorption members are compressively deformable, as is the lighting garnish. The compressive deformation of the upper and lower impact absorption members like compressive deformation of the lighting garnish absorbs the impact load, keeping the upper and lower impact absorption members and the lighting garnish generally flush with one another, such that the impact load dispersed over the entire area of the upper and lower impact absorption members and the lighting garnish can be further reduced to thereby protect the object from the impact more successfully.

As defined in claim 3, the upper impact absorption member is disposed between the front connection portion and the bumper face, and the lower impact absorption member is disposed between the lower bulk member and the bumper face. When an impact load is applied from the front side of the vehicle body to the bumper face, thus, the upper and lower impact absorption members bear the applied impact load without allowing the lighting portion to protrude from between the upper and lower impact absorption members.

As a result, the upper and lower impact absorption members are generally flush with the lighting portion such that the upper and lower impact absorption members and the lighting portion support the object to protect the object more successfully without bending the object, and hence protect the object more successfully.

As defined in claim 4, upper impact absorption member and the bumper face define the upper gap therebetween, the lower impact absorption member and the bumper face define the lower gap therebetween, and the lighting garnish and each of the front curved sections define the lighting gap therebetween. The lighting gap extends longitudinally of the vehicle body by the same distance as the upper gap and the lower gap.

By virtue of the upper and lower gaps and the lighting gap, the bumper face can deform in a preferred manner to absorb the impact load. As a result, a load applied to the object can be further reduced to protect the object more successfully.

As defined in claim 5, each of the upper impact absorption member and the lower impact absorption member is box-shaped and has an open side facing the bumper face. When the bumper face deforms due to the impact load, the deformed bumper face abuts each of the upper impact absorption member and the lower impact absorption member to close the open side of each of the upper impact absorption member and the lower impact absorption member. After the bumper face abuts on the upper and lower impact absorption members, the upper and lower impact absorption members prevent the bumper face from further deforming, and keep the bumper face generally flat.

As a result, the upper and lower parts of the bumper face located above and below the lighting portion are kept flat to be generally flush with the lighting portion, such that the impact load applied from the front side of the vehicle body can be more successfully dispersed to the upper and lower parts of the bumper face and the lighting portion so as to protect the object from the impact of the bumper face.

As defined in claim 6, the lighting garnish has the overlapping part aligned with each of the front curved sections longitudinally of the vehicle body, and the lighting garnish has the garnish ribs in the overlapping part. With the overlapping part of the lighting garnish abutting on one of the front curved sections, the garnish ribs can support the bumper face.

By having the garnish ribs, the lighting garnish provides an enlarged area to support the impact load applied from the front side of the vehicle body. By virtue of the enlarged area of the lighting garnish, the impact load can be dispersed more successfully to thereby protect the object from the impact of the bumper face.

As defined in claim 7, the lower bulk member includes the support part located adjacent the lower impact absorption member, and the front surface of the support part and the front surface of the lower impact absorption member are arranged in generally the same location longitudinally of the vehicle body. When the impact load is applied to a portion of the bumper face corresponding to the support part, the bumper face comes into abutment on the support part.

As the bumper face abuts on the support part, the bumper face is kept flush with the lighting portion, such that the impact load applied from the front side of the vehicle body is better dispersed to the lighting portion and the portion of the bumper face abutting on the support part. As a result, the object can be protected from the impact of the bumper face.

Since the lower bulk member has the support part, a size of the lower impact absorption member need not be as large as a size of the upper impact absorption member.

The lower impact absorption member may be removed and the support part of the lower bulk member may extend laterally to a location of the lower impact absorption member. The removal of the lower impact absorption member reduces the number of parts and hence the number of steps of assemblage.

### BRIEF DESCRIPTION OF DRAWINGS

Fig. 1 is a perspective view of a vehicle having a vehicle body front structure according to an embodiment of the present invention;
Fig. 2 is an exploded perspective view of the vehicle body front structure shown in Fig. 1;
Fig. 3 is an enlarged cross-sectional view taken along line 3-3 of Fig. 3;
Fig. 4 is an exploded perspective view of the vehicle body front structure shown in Fig. 3;
Fig. 5 is an enlarged cross-sectional view taken along line 5-5 of Fig. 1;
Fig. 6 is an enlarged view showing in cross-section a region 6 of Fig. 3;
Fig. 7 is an enlarged cross-sectional view taken along line 7-7 of Fig. 1;
Fig. 8 is an exploded cross-sectional view of the vehicle body front structure shown in Fig. 6;
Fig. 9 is an enlarged cross-sectional view taken along line 9-9 of Fig. 1;
Fig. 10 is an exploded perspective view of the vehicle body front structure shown in Fig. 4;
Fig. 11(a) is a perspective view of an upper impact absorption member shown in Fig. 10 and Fig. 11(b) is a rear perspective view of the upper impact absorption member;
Fig. 12(a) is a front perspective view of a lower impact absorption member and Fig. 12(b) is a rear perspective view of the lower impact absorption member;
Fig. 13 is a view showing an example where a bumper face impacts on an object in front of a light body of a fog light
Fig. 14 is a view showing an example where an impact load applied to the bumper face is borne;
Fig. 15 is a view showing an example where the upper impact absorption member and a support part protect the object;
Fig. 16 is a view showing an example where the bumper face impacts on an object in front of an overlapping part of the fog light;
Fig. 17 is a view showing an example where an impact load applied to the bumper face is borne; and
Fig. 18 is a view showing an example where the upper and lower impact absorption members protect the object.

### DESCRIPTION OF EMBODIMENT

A certain preferred embodiment of the present invention is described below with reference to the accompanying drawings.

### Embodiment

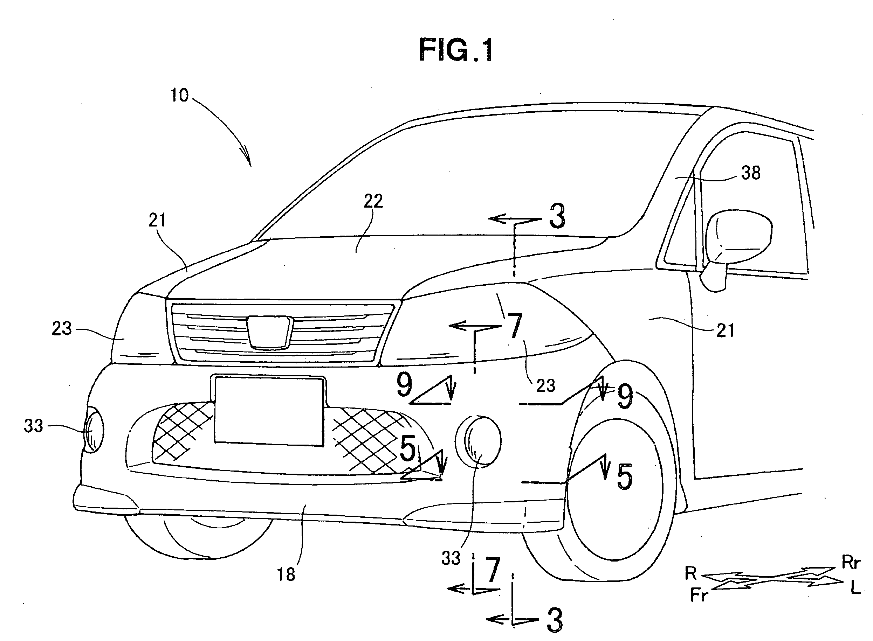

As shown in Fig. 1, a vehicle body front part 10 includes left and right (a pair of) front side frames 12, 12 extending longitudinally of a vehicle body, and left and right (a pair of) front upper members 13, 13 disposed laterally outwardly of the left and right front side frames 12, 12. The vehicle body front part 10 also includes a front bulkhead 15 disposed on front end portions 12a, 12a of the left and right front side frames 12, 12, a bumper beam 17 disposed on the front end portions 12a, 12a of the left and right front side frames 12, 12, and a bumper face 18 disposed forwardly of the front bumper beam 17.

The vehicle body front part 10 further includes left and right front fenders 21, 21 disposed laterally outwardly of the left and right front upper members 13, 13, a bonnet (engine hood) 22 interconnecting the left and right front fenders 21, 21, and left and right front lights 23, 23 (including blinkers etc.).

The vehicle body front part 10 has left and right parts arranged in a symmetrical relationship, and, hence, members (including parts) of the left part are designated by the same reference numerals as the corresponding members (including parts) of the right part, and description of the members (including parts) of the right part is omitted.

In addition, the vehicle body front part 10 includes a front connection portion 25 interconnecting the left front side frame 12 and the left front upper member 13, an upper impact absorption member 27 disposed on the front connection portion 25, a lower impact absorption member 31 disposed on a lower bulk member 46 of the front bulkhead 15, and a fog light (lighting portion) 33 disposed in the bumper face 18.

The left front side frame 12 is disposed on a left side of a front part of a vehicle and laterally spaced a predetermined interval from the right front side frame 12. The right front side frame 12 is disposed on a right side of the front part of the vehicle. The left front side frame 12 is a framework extending longitudinally of the vehicle body and having a rear end portion 12b connected through an outrigger to a left side sill.

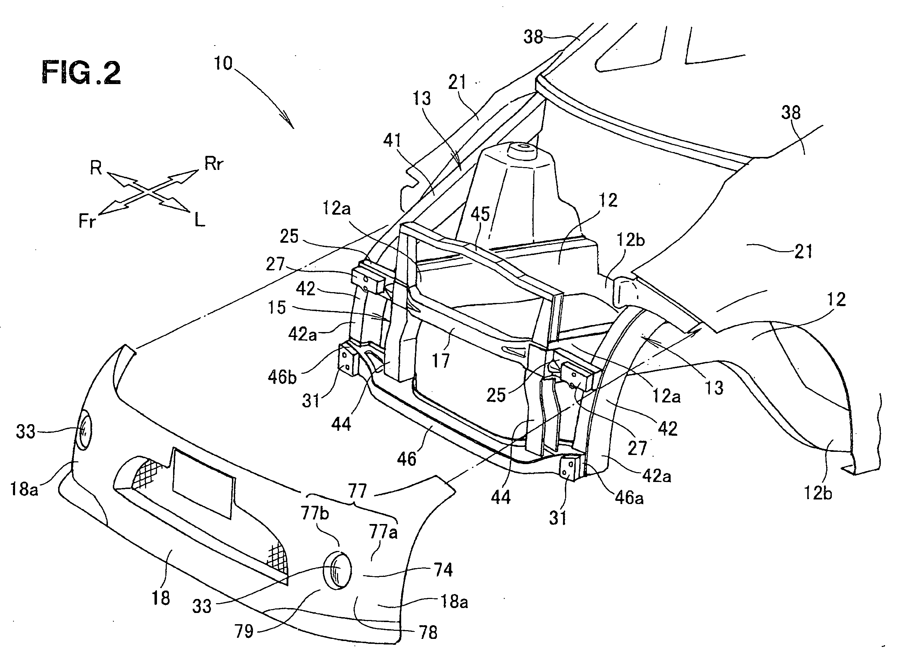

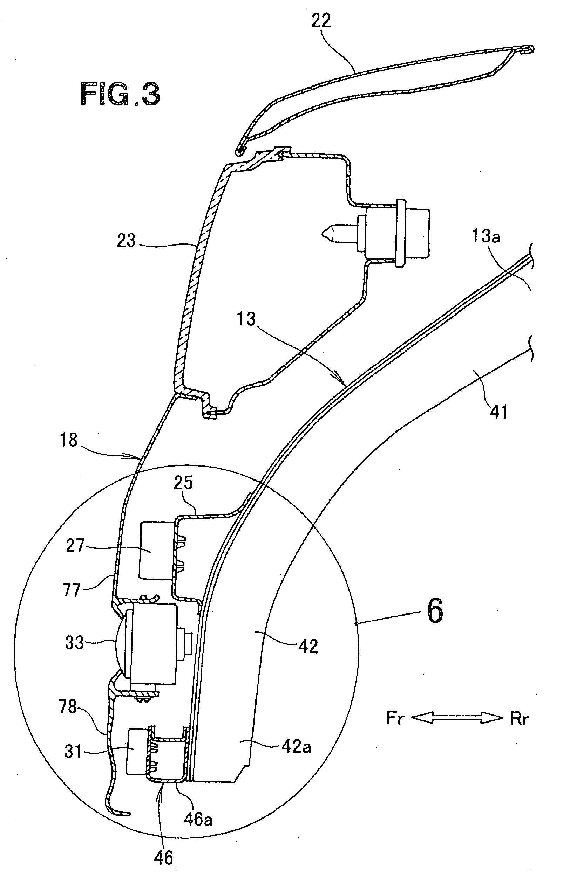

As shown in Fig. 3, the left front upper member 13 is disposed laterally outwardly (leftward) of the left front side frame 12 and has a rear end portion 13a connected to a left front pillar 38 (Fig. 2). The left front upper member 13 includes a rear slanting portion (upper member) 41 extending forwardly from the front pillar 38 in a downwardly inclined position, and a front curved section (front portion, lower member) 42 forwardly convexly curved and extending downwardly from the rear slanting portion 41. The front curved section 42, which extends downwardly from the rear slanting portion 41 in the forward convex shape, is disposed in a generally vertical orientation.

As shown in Fig. 2, the front bulkhead 15 extends between and interconnects the front end portions 12a, 12a of the left and right front side frames 12, 12 and has a generally rectangular shape as viewed in front elevation. The front bulkhead 15 includes a left side stay 44 disposed on the front end portion 12a of the left front side frame 12, a right side stay 44 disposed on the front end portion 12a of the right front side frame 12, an upper bulk member 45 extending between and interconnecting upper end portions of the left and right side stays 44, 44, and a lower bulk member 46 extending between and interconnecting lower end portions of the left and right side stays 44,44.

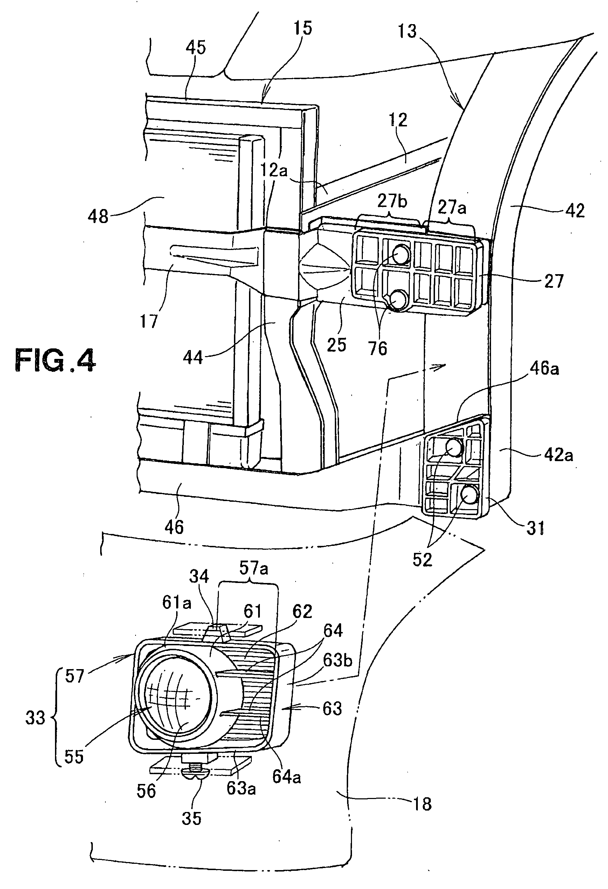

Disposed on the front bulkhead 15 are a condenser 48 (Fig. 4) and a radiator (not shown) acting as a cooling part. The radiator is a heat exchanger for cooling an engine cooling water with ambient air. The condenser 48 liquefies, for example, a coolant gas for an air-conditioner.

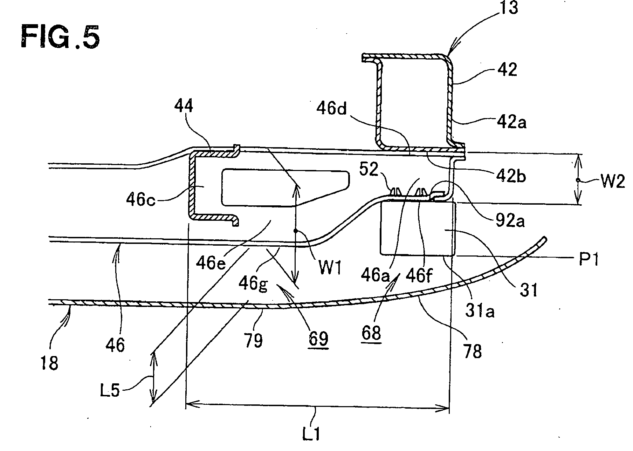

The lower bulk member 46 laterally extends between and interconnects lower end portions of the left and right side stays 44, and defines a lower part of the front bulk head 15. As shown in Fig. 4 and Fig. 5, the lower bulk nenber 46 has a left end portion 46a connected to a lower end portion 42a of the left front upper member 13 (front curved section 42). The lower bulk member 46 has a right end portion 46b (shown in Fig. 2) connected to a lower end portion 42a of the right front upper member 13 (front curved section 42).

The lower bulk member 46 has a support area 46c on which the lower end portion of the left side stay 44 is disposed. The support area 46c of the lower bulk member 46 is offset from the left end portion 46a toward a lateral center of the vehicle body by a predetermined distance L1. The lower bulk member 46 has a left rear end portion 46d disposed on a lower front end portion 42b of the front curved section 42.

As shown in Fig. 5 to Fig. 7, the lower bulk member 46 has a part 46e located in a vicinity of a lateral outside of the left side stay 44, which part has a width W1, and the left end portion 46a has a width W2. The part 46e is hereinafter referred to as a support part. The width W1 of the support part 46e is larger than the width W2 of the left end portion 46a, such that the left end portion 46a of the lower bulk member 46 is recessed rearwardly of the vehicle body.

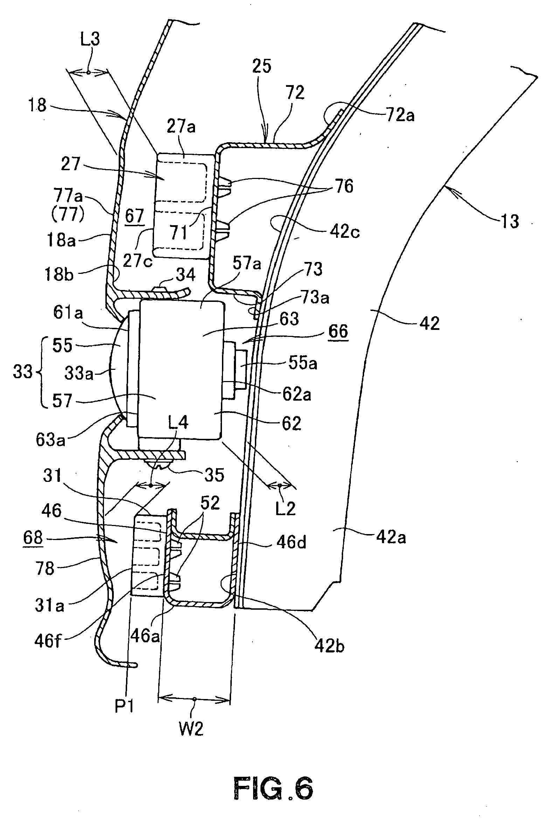

As shown in Fig. 5 and. Fig. 6, the left end portion 46a has a front surface 46f to which the lower impact absorption member 31 is attached by means of upper and lower clips 52, 52. The lower impact absorption member 31 is disposed below a lateral outer half 27a of the upper impact absorption member 27 (see Fig. 4).

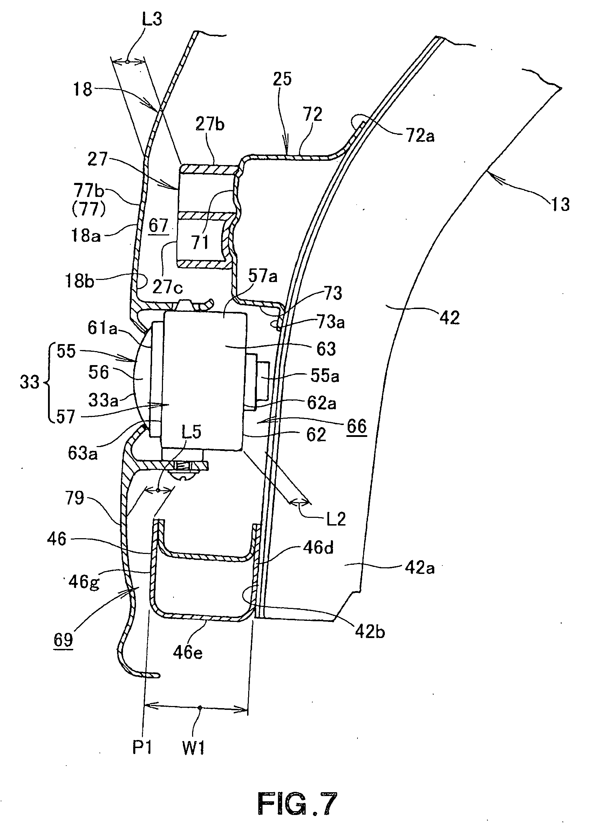

As shown in Fig. 5 and Fig. 7, the support part 46e is disposed below a lateral inner half 27b of the upper impact absorption member 27 (see Fig. 4). The support part 46e is located laterally inwardly of the lower impact absorption member 31 in an adjacent relationship therewith.

The width W1 of the support part 46e is larger than the width W2 of the left end portion 46a, such that the support part 46e has a front surface 45g generally flush with a front surface 31a of the lower impact absorption member 31. In other words, the front surface 46g of the support part 46e and the front surface 31a of the lower impact absorption member 31 are arranged in generally the same location P1 longitudinally of the vehicle body.

The support part 46e is compressively deformable (crushable) due to an impact load applied from a front side of the vehicle body. Since the lower bulk member 46 has the support part 46e, a size of the lower impact absorption member 31 need not be as large as a size of the upper impact absorption member 27.

The bumper face 18 is disposed forwardly of the lower bulk member 46 (front bulkhead 15). As shown in Fig. 2, the bumper face 18 is a resin-made member disposed forwardly of the front bulkhead 15 to cover the front bulkhead 15 and the front bumper beam 17. The bumper face 18 is made of synthetic resin such as polypropylene (PP). The bumper face 18 has left and right end portions 18a, 18a at which fog lights 33 are disposed.

As shown in Fig. 6, the fog light 18 is attached to the left end portion 18a of the bumper face 18 with a lug 34 and a screw 35 (see Fig. 4, too) projecting on a side of a back surface 18b. The fog light 33 is located between the front connection portion 25 and the lower bulk member 46 and forwardly of the front curved section 42.

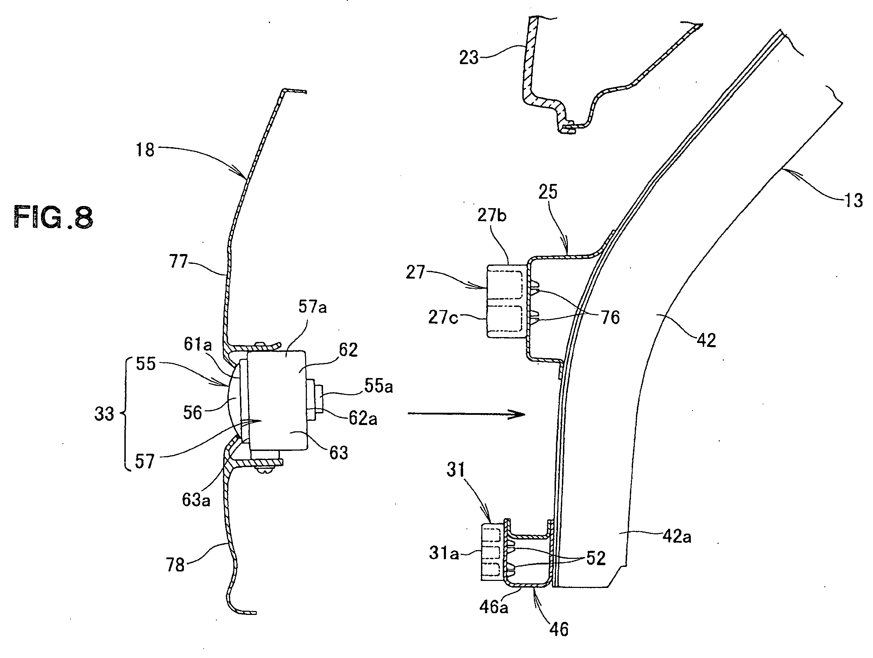

As shown in Fig. 4 and Fig. 8, the fog light 33 includes a light body 55 adapted to illuminate the front of the vehicle body and a lighting garnish 57 covering the light body 55. The lighting garnish 57 is a member made of synthetic resin such as polypropylene (PP) and defining an outline (outside) of the fog light 33.

The lighting garnish 57 includes a cylindrical portion 61 covering an outer circumferential edge of a lens 56 of the light body 55, and a bottom portion 62 disposed on a rear end portion of the cylindrical portion 61. The lighting garnish 57 further includes a circumferential wall portion 63 disposed on an outer circumference of the bottom portion 62, and upper and lower garnish ribs 64 disposed between the circumferential wall portion 63 and the cylindrical portion 61. The bottom portion 62 and the circumferential wall portion 63 define a box shape of the lighting garnish 57. The box-shaped lighting garnish 57 has an open front end portion 63a of the circumferential wall portion 63.

The cylindrical portion 61 covers the outer circumferential edge of the lens 56 of the light body 55 and has a tubular shape to receive the light body 55. The cylindrical portion 61 has an opening in which the lens 56 of the light body 55 is located. The light body 55 emits a light passing through the lens 56 in the opening of the cylindrical portion 61 to illuminate the front of the vehicle body.

The bottom portion 62 is disposed on the rear end portion of the cylindrical portion 61 and is generally rectangular plate-shaped. The light body 55 has a bulb rear end portion 55a protruding rearwardly from a rear surface 62a of the bottom portion 62. The bulb rear end portion 55a is offset from the front curved section 42 of the left front upper member 13 toward a lateral center of the vehicle, such that the bulb rear end portion 55a avoids interfering with the front curved section 42 as the fog light 33 moves rearwardly.

The circumferential wall portion 63 extends along the outer circumference of the bottom portion 62 in the form of a generally rectangular frame. The circumferential wall portion 63 has the front end portion 63a located forwardly of a front end portion 61a of the cylindrical portion 61. That is, the front end portion 61a of the cylindrical portion 61 protrudes forwardly slightly beyond the front end portion 63a of the circumferential wall portion 63.

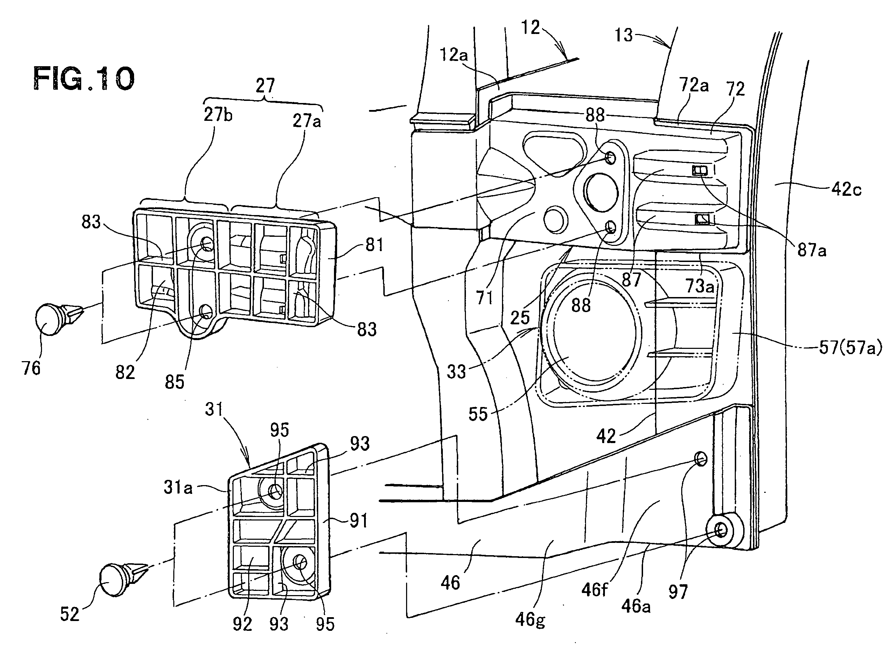

The lighting garnish 57 has the box-shape defined by the circumferential wall portion 63 and the bottom portion 62, and the front end portion 63a is opened. The lighting garnish 57 has a lateral outer half 57a aligned with the front curved section 42 longitudinally of the vehicle body (see Fig. 10, too). The lateral outer half 57a of the lighting garnish 57 is hereinafter referred to as an overlapping part 57a.

As shown in Fig. 6, a lighting gap 66 is defined between a rear surface of the lighting garnish 57 (i.e., the overlapping part 57a) and a front surface of the front curved section 42. By virtue of the lighting gap 66, the fog light 33 can move rearwardly of the vehicle body as the bumper face 18 deforms rearwardly of the vehicle body due to an impact load applied from the front side of the vehicle body to the bumper face 18. The lighting gap 66 extends longitudinally of the vehicle body by the same distance L2 as a distance L3 by which an upper gap 67 extends longitudinally of the vehicle body or a distance L4 by which a lower outer gap (lower gap) 68 extends longitudinally of the vehicle body.

The overlapping part 57a of the fog light 33 is located rearwardly of a garnish part 74 (Fig. 2) of the bumper face 18. The garnish part 74 corresponds to the overlapping part 57a of the lighting garnish 57, such that the garnish part 74 abuts on the overlapping part 57a of the fog light 33 as the bumper face 18 deforms rearwardly of the vehicle body.

As shown in Fig. 4, the upper and lower garnish ribs 64 are disposed in a vertical spaced relationship in the overlapping part 57a of the lighting garnish 57. The upper and lower garnish ribs 64 protrude forwardly from the bottom portion 62 in the overlapping part 57a and extend horizontally from an outer wall 63b of the circumferential wall portion 63 to the cylindrical portion 61.

The upper and lower garnish ribs 64 have respective front end portions 64a generally flush with the front end portion 63a of the circumferential portion 63, such that the circumferential wall portion 63 and the upper and lower garnish ribs 64 support the bumper face 18 (garnish part 74) even when the overlapping part 57a of the lighting garnish 57 abuts on the front curved section 42. As a result, the overlapping part 57a prevents deformation of the garnish part 74 of the bumper face 18, keeping the bumper face 18 generally flat.

As discussed above, the lighting garnish 57 has the overlapping part 57a and is box-shaped and made of synthetic resin such as polypropylene (PP). When an impact load is applied from the front side of the vehicle body to the fog light 33, the fog light 33 moves rearwardly of the vehicle body by the distance L2, causing the overlapping part 57a to abut on the front curved section 42. Under this condition, the application of the impact load continues, thereby compressively compressing (crushing) the lighting garnish 57.

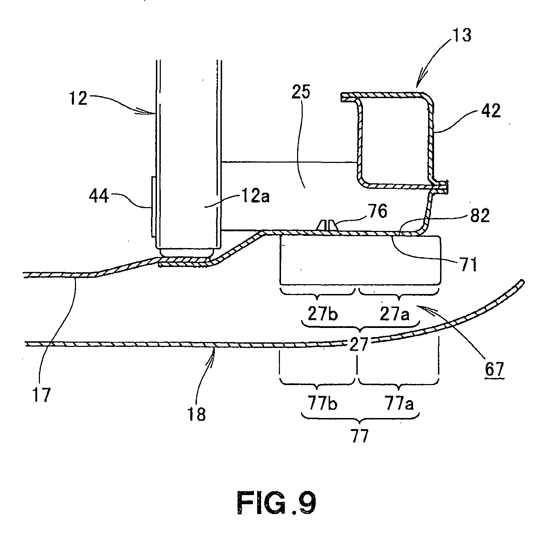

As shown in Fig. 9 and Fig. 10, the front connection portion 25 laterally extends between and interconnects the front curved section 42 of the left front upper member 13 and the front end portion 12a of the left front side frame 12. As shown in Fig. 6, the front connection portion 25 includes a front flat portion 71, an upper bent piece 72, and a lower bent piece 73. The front flat portion 71, the upper bent piece 72 and the lower bent piece 73 define a generally U-shaped cross-sectional configuration.

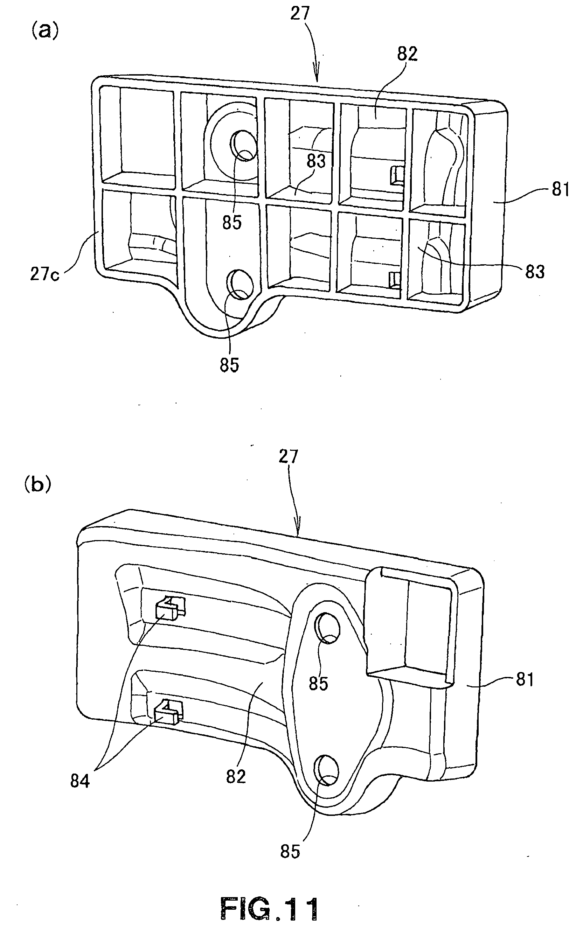

As shown in Fig. 6 and Fig. 10, the front flat portion 71 is a generally flat plate member disposed generally vertically. The front flat portion 71 has a front surface to which the upper impact absorption member 27 is attached by means of upper and lower locking prongs 84 (Fig. 11(b)) and upper and lower clips 76.

The upper bent piece 72 is bent rearwardly from an upper edge of the front flat portion 71. The upper bent piece 72 includes a rear end portion having a joining end portion 72a at a lateral outer side thereof. The joining end portion 72a is joined to a generally vertical central portion 42c of the front curved section 42.

The lower bent piece 73 is bent rearwardly from a lower edge of the front flat portion 71. The lower bent piece 73 includes a rear end portion having a joining end portion 73a at a lateral outer side thereof. The joining end portion 73a is joined to the generally vertical central portion 42c of the front curved section 42. The upper impact absorption member 27 is disposed on the front connection portion 25. The front connection portion 25 is located above the fog light 33, and hence the upper impact absorption member 27 is disposed above the fog light 33.

The upper impact absorption member 27 is disposed on the front connection portion 25 in an opposed relationship with an upper part 77 of the bumper face 18, which part 77 is located above the fog light 33. The upper part 77 of the bumper face 18 is hereinafter referred to as a "light upper part 77". The front connection portion 25, the upper impact absorption member 27 and the bumper face 18 (light upper part 77) are arranged longitudinally of the vehicle with the upper impact absorption member 27 disposed between the front connection portion 25 and the light upper part 77.

The upper gap 67 is defined between the light upper part 77 and the upper impact absorption member 27 disposed on the front connection portion 25. The upper gap 67 extends longitudinally of the vehicle by the distance L3 equal to the distance L2 of the lighting gap 66 and the distance L4 of the lower outer gap 68.

As shown in Fig. 10 and Fig. 11, the upper impact absorption member 27 is made of synthetic resin such as polypropylene (PP), as is the lighting garnish 57 of the fog light 33. The upper impact absorption member 27 is compressively deformable (crushable) due to an impact load applied from the front side of the vehicle bod.

More specifically, the upper impact absorption member 27 includes a sidewall portion 81 of generally rectangular frame shape, a bottom portion 82 disposed on the sidewall portion 81, and grid-shaped reinforcement ribs 83 disposed on the bottom portion 82. The upper impact absorption member 27 is of a box-shape defined by the sidewall portion 81 and the bottom portion 82, and has an open front side 27c opposed to the light upper part 77 (Fig. 6) of the bumper face 18.

The bottom portion 82 has the upper and lower locking prongs 84 at a lateral outer side thereof, and upper and lower through-holes 85 formed closer to a lateral center of the bottom portion 82 than the upper and lower locking prongs 84. The upper and lower locking prongs 84 are lockable in respective locking holes 87a of upper and lower support portions 87. The upper and lower support portions 87 and the upper and lower locking holes 87a are formed on the front flat portion 71 of the front connection portion 25. The upper and lower through-holes 85 are formed coaxially with upper and lower attachment holes 88, respectively. The upper and lower attachment holes 88 are formed on the front flat portion 71 of the front connection portion 25.

The upper and lower locking prongs 84 are locked in the respective locking holes 87a of the upper and lower support portions 87. The upper clip 76 inserted through the upper through-hole 85 and the upper attachment hole 88 is locked. The lower clip 76 inserted through the upper through-hole 85 and the upper attachment hole 88 is locked. By the upper and lower locking prongs 84 and the upper and lower clips 76, thus, the upper impact absorption 27 is attached to the front connection portion 25.

Under this condition, the bottom portion 82 of the upper impact absorption member 27 is in contact with the front flat portion 71 of the front connection portion 25 (Fig. 9). The upper impact absorption member 27 attached to the front connection portion 25 has the open front side 27c disposed in an opposed relationship with the light upper part 77 (Fig. 6) of the bumper face 18.

The light upper part 77 closes the open front side 27c of the upper impact absorption member 27 in the opposed relationship with the open front side 27c. The bumper face 18 can deform rearwardly of the vehicle body due to an impact load applied from the front side of the vehicle.

As the bumper face 18 deforms, the light upper part 77 (Fig. 6) of the bumper face 18 abuts on the open front side 27c of the upper impact absorption member 27 to close the open front side 27c. As a result, the front side 27c of the upper impact absorption member 27 prevents deformation of the light upper part 77 to keep the light upper part 77 generally flat. In addition, the grid-shaped reinforcement ribs 83 of the upper impact absorption member 27 keep the light upper part 77 flat.

The lower bulk member 46 is disposed below the upper impact absorption member 27, and the lower impact absorption member 31 is disposed on the lower bulk member 46. As shown in Fig. 6, the lower bulk member 46 is disposed below the fog light 33. Since the lower bulk member 46 is located below the fog light 33, the lower impact absorption member 31 is disposed below the fog light 33.

As shown in Fig. 6 and Fig. 10, the lower impact absorption member 31 is disposed on the left end portion 46a of the lower bulk member 46 in an opposed relationship with a lower part 78 of the bumper face 18, which part 78 is located below the fog light 33. The lower part 78 is hereinafter referred to as a "light lower outer part 78". The lower bulk member 46, the lower impact absorption member 31 and the bumper face 18 (the light lower outer part 78) are arranged longitudinally of the vehicle body with the lower impact absorption member 31 disposed between the lower bulk member 46 and the bumper face 18.

The lower outer gap 68 is defined between the light lower outer part 78 and the lower impact absorption member 31 disposed on the lower bulk member 46. The lower outer gap 68 is located below an outer half 77a (Fig. 9) of the light upper part 77. The lower outer gap 68 extends longitudinally of the vehicle body by the distance L4 equal to the distance L2 of the lighting gap 66 and the distance L 3 of the upper gap 67.

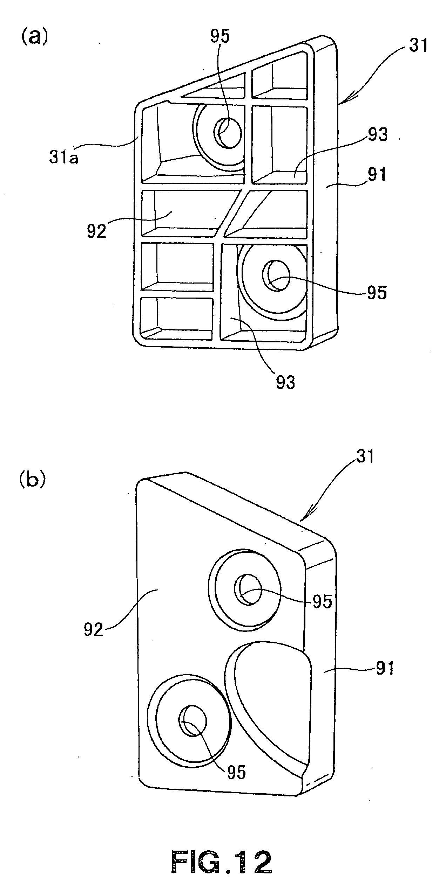

As shown in Fig. 10 and Fig. 12, the lower impact absorption member 31 is made of synthetic resin such as polypropylene (PP), as is the lighting garnish 57 of the fog light 33 or the upper impact absorption member 27. That is to say, the lower impact absorption member 31 is compressively deformable (crushable) due to an impact load applied from the front side of the vehicle body.

The lower impact absorption member 31 includes a generally rectangular framework-shaped side wall portion 91, a bottom portion 92 disposed on the sidewall portion 91, and grid-shaped reinforcement ribs 93 disposed on the bottom portion 92. The sidewall portion 91 and the bottom portion 92 define a box-shape of the lower impact absorption member 31. The lower impact absorption member 31 has an open front side 31a facing the light lower outer part 78 (Fig. 6) of the bumper face 18.

The bottom portion 92 has upper and lower through-holes 95. As shown in Fig. 10, the upper and lower through-holes 95 are formed coaxially with upper and lower attachment holes 97 of the lower bulk member 46, respectively. The upper and lower attachment holes 97 are formed in the front surface 46f of the left end portion 46a of the lower bulk member 46.

The upper clip 52 inserted through the upper through-hole 95 and the upper attachment hole 97 is locked. The lower clip 52 inserted through the lower through-hole 95 and the lower attachment hole 97 is locked. By the upper and lower clips 52, thus, the lower impact absorption member 31 is attached to the front surface 46f of the lower bulk member 46 (left end portion 46a).

Under this condition, the bottom portion 92 is in contact with the front surface 46f of the lower bulk member 46 (left end portion 46a) (Fig. 5). The open front side 31a of the lower impact absorption member 31 attached to the lower bulk member 46 is located in an opposed relationship with the light lower outer part 78 (Fig. 6) of the bumper face 18.

The open front side of the lower impact absorption member 31 can be closed by the light lower outer part 78. That is, the bumper face 18 can deform rearwardly of the vehicle body due to an impact load applied from the front side of the vehicle body.

As the bumper face 18 deforms, the light lower outer part 78 (Fig. 6) of the bumper face 18 abuts on the open front side 31a of the lower impact absorption member 31 to close the open front side 31a. As a result, the front side 31a of the lower impact absorption member 31 prevents deformation of the light lower outer part 78 to keep the light lower outer part 78 generally flat. In addition, the grid-shaped reinforcement ribs 93 of the lower impact absorption member 31 keep the light lower outer part 78 flat.

As shown in Fig. 5 and Fig. 7, the front surface 46g of the lower impact absorption member 31 (support part 46e) is generally flush with the front surface 31a of the lower impact absorption member 31. The front surface 46g of the support part 46e is located in an opposed relationship with a light lower inner part 79 of the bumper face 18.

The light lower inner part 79 of the bumper face 18 corresponds to the front surface 46g of the lower bulk member 46. The front surface 46g of the support part 46e and the light lower inner part 79 define a lower inner gap (lower gap) 69 therebetween. The lower inner gap 69 extends longitudinally of the vehicle body by a distance L5 equal to the distance L2 of the lighting gap 66, the distance L3 of the upper gap 67 or the distance L 4 of the lower outer gap 68.

The bumper 18 can deform rearwardly of the vehicle body due to an impact load applied from the front side of the vehicle body. The rearward deformation of the bumper face 18 brings the light lower inner part 79 of the bumper face 18 into abutment on the front surface 46g of the support part 46e.

The upper gap 67, the lower outer gap 68, the lower inner gap 69 and the lighting gap 66 extend the same distance L3, L4, L5 or L2. As shown in Fig. 2, the light lower inner part 79 is located below an inner half 77b (see Fig. 9, too) of the light upper part 77. The light lower outer part 78 is located below an outer half 77a (see Fig. 9, too) of the light upper part 77.

Turning to Fig. 7, when the inner half 77b of the light upper part 77 and the light lower inner part 79 move rearwardly of the vehicle body due to an impact load, the inner half 77b of the light upper part 77 abuts on the front side 27c of the upper impact absorption member 27 (lateral inner half 27b), whereupon the front side 27c of the upper impact absorption member 27 (lateral inner half 27b) supports the inner half 77b of the light upper part 77 to prevent the inner half 77b from deforming rearwardly of the vehicle body.

The light lower inner part 79 generally simultaneously abuts on the front surface 46g of the lower bulk member 46 (support part 46e). At this time, the front surface 46g of the lower bulk member 46 (support part 46e) supports the light lower inner part 79 to prevent the light lower inner part 79 from deforming rearwardly of the vehicle body.

The fog light 33 then moves rearwardly of the vehicle body, causing the overlapping part 57a of the fog light 33 to abut on the front curved section 42. Under this condition, a front portion 33a of the fog light 33 is generally flush with the inner half 77b of the light upper part 77 and the light lower inner part 79.

That is to say, the light upper part 77 (inner half 77b) and the light lower inner part 79 can stop at a position generally flush with the fog light 33. As a result, the impact load can be borne by and dispersed to the light upper part 77 (inner half 77b), the light lower inner part 79 and the fog light 33.

In other words, unlike the prior art, the bumper face 18 can disperse the impact load without having the surroundings of the fog light 33 offset forwardly of the vehicle body from the fog light 33. More specifically, the surroundings of the fog light 33, i.e. the light upper part 77 (inner half 77b) and the light lower inner part 79 can disperse the impact load without being offset forwardly of the vehicle body from the fog light 33. By thus dispersing the impact load, the bumper face 18 can mitigate an impact on an object, thereby protecting the object from the impact. Since the lower bulk member 46 has the support part 46e, the size of the lower impact absorption member 31 (Fig. 4) need not be as large as the size of the upper impact absorption member 27.

The upper impact absorption member 27 (lateral inner half 27b) and the lower bulk member 46 (support part 46e) are compressively deformable, as is the light garnish 57. The compressive deformation of the lateral inner half 27b and the support part 46e like compressive deformation of the lighting garnish 57 absorbs the impact load, keeping the lateral inner half 27b, the support part 46e and the lighting garnish 57 generally flush with one another, such that the impact load dispersed over entire areas of the lateral inner half 27b, the support part 46e and the lighting garnish 57 can be further reduced to thereby protect the object from the impact more successfully.

The lateral inner half 27b and the support part 46e can bear the impact load applied from the front side of the vehicle body without allowing the fog light 33 to project beyond the lateral inner half 27b and the support part 46e. As a result, the lateral inner half 27b, the support part 46e and the fog light 33 become generally flush with the fog light 33 such that the lateral inner half 27b, the support part 46e and the fog light 33 support the object without bending the object and hence protect the object more successfully.

The distance L2 of the lighting gap 66 is set to be equal to the distance L3 of the upper gap 67 or the distance L5 of the lower inner gap 69 such that the bumper face 18 can deform rearwardly of the vehicle body in a better manner to absorb the impact load. This makes it possible to reduce an impact on the object for protecting the object more successfully.

Referring to Fig. 6, when the outer half 77a of the light upper part 77 and the light lower outer part 78 move rearwardly of the vehicle body due to an impact load, the outer half 77a of the light upper part 77 abuts on the front side 27c of the upper impact absorption member 27 (lateral outer half 27a), whereupon the front side 27c of the upper impact absorption member 27 (lateral outer half 27a) supports the outer half 77a of the light upper part 77 to prevent the outer half 77a from deforming rearwardly of the vehicle body.

The light lower outer part 78 generally simultaneously abuts on the front side 31a of the lower impact absorption member 31. At this time, the front surface 31a of the lower impact absorption member 31 supports the light lower outer part 78 to prevent the light lower outer part 78 from deforming rearwardly of the vehicle body.

The fog light 33 then moves rearwardly of the vehicle body, causing the overlapping part 57a of the fog light 33 to abut on the front curved section 42. Under this condition, the overlapping part 57a of the fog light 33 is generally flush with the outer half 77a of the light upper part 77 and the light lower outer part 78.

That is to say, the light upper part 77 (outer half 77a) and the light lower outer part 78 can stop at a position generally flush with the fog light 33. As a result, the impact load can be borne by and dispersed to the light upper part 77 (outer half 77a), the light lower outer part 78 and the fog light 33.

In other words, unlike the prior art, the bumper face 18 can disperse the impact load without having the surroundings of the fog light 33 offset forwardly of the vehicle body from the fog light 33. More specifically, the surroundings of the fog light 33, i.e. the light upper part 77 (outer half 77a) and the light lower outer part 78 can disperse the impact load without being offset forwardly of the vehicle body from the fog light 33. By thus dispersing the impact load, the bumper face 18 can mitigate an impact on an object, thereby protecting the object from the impact.

The garnish part 74 forming one part of the surroundings of the fog light 33 can disperse the impact load without being offset forwardly of the vehicle body from the fog light 33, as in outer half 77a and the light lower outer part 78.

The upper impact absorption member 27 (lateral outer half 27a) and the lower impact absorption member 31 are compressively deformable, as is the light garnish 57. The compressive deformation of the lateral outer half 27a and the lower impact absorption member 31 like compressive deformation of the lighting garnish 57 absorbs the impact load, keeping the lateral outer half 27a, the lower impact absorption member 31 and the lighting garnish 57 generally flush with one another, such that the impact load dispersed over entire areas of the lateral outer half 27a, the lower impact absorption member 31 and the lighting garnish 57 can be further reduced to thereby protect the object from the impact more successfully.

The lateral outer half 27a and the impact absorption member 31 can bear the impact load applied from the front side of the vehicle body without allowing the fog light 33 to project beyond the lateral outer half 27a and the impact absorption member 31. As a result, the lateral outer half 27a, the impact absorption member 31 and the fog light 33 become generally flush with the fog light 33 such that the lateral outer half 27a, the impact absorption member 31 and the fog light 33 support the object without bending the object and hence protect the object more successfully.

The distance L2 of the lighting gap 66 is set to be equal to the distance L3 of the upper gap 67 or the distance L4 of the lower outer gap 68 such that the bumper face 18 can deform rearwardly of the vehicle body in a better manner to absorb the impact load. This makes it possible to reduce an impact on the object for protecting the object more successfully.

As the bumper face 18 abuts on the front side 27c of the upper impact absorption member 27, the front surface 31a of the lower impact absorption member 31, the upper and lower impact absorption members 27, 31 prevent deformation of the bumper face 18 (the light upper part 77 and light lower outer part 78) to thereby keep the bumper face 18 generally flat.

As a result, the parts (the light upper part 77 and light lower outer part 78) of the bumper face 18, which are located above and below the fog light 33, can be kept generally flush with the fog light 33, such that the impact load applied from the front side of the vehicle body can be better dispersed to the light upper part 77, the light lower outer part 78 and the fog light 33 for protection of the object from impact.

In addition, the overlapping part 57a of the lighting garnish 57 shown in Fig. 4 prevents deformation of the garnish part 74 (Fig. 2) of the bumper face 18 to keep the bumper face 18 generally flat. The overlapping part 57a adds to an area to support the impact load applied from the front side of the vehicle body. As a result, the impact load can be dispersed more successfully to protect the object form the impact in a better manner.

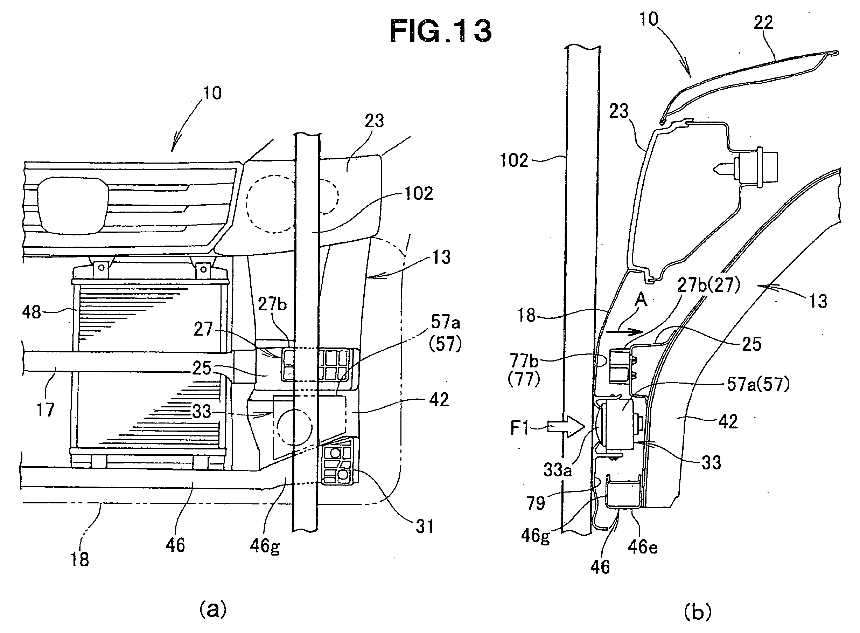

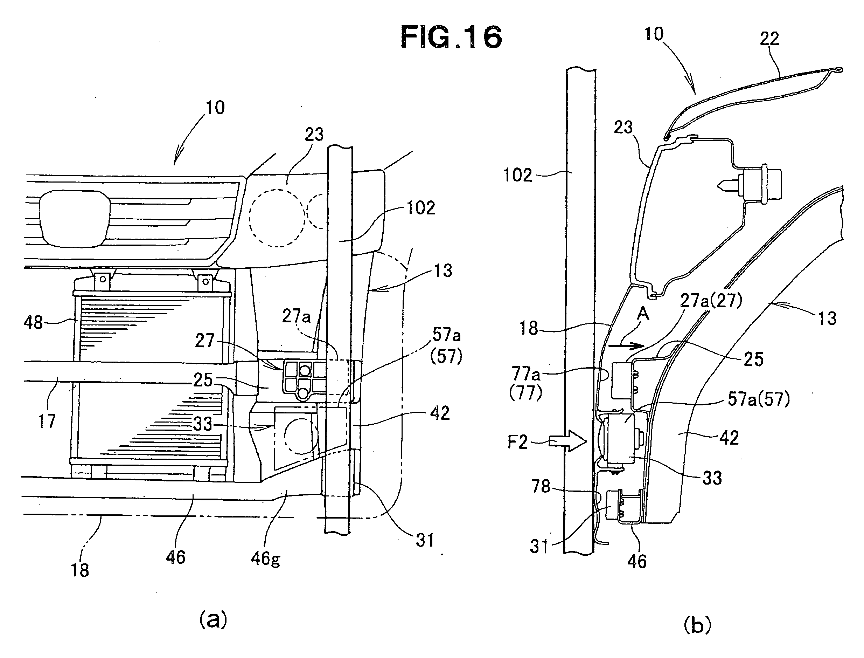

An example of impact of the bumper face 18 on an object 102 is discussed below with reference to Fig. 13 to Fig. 18. The object 102 is a bar-shaped member is disposed in a vertical orientation. It is noted that Fig. 13(a) and Fig. 16(a) shown the bumper face 18 and the fog light 33 in phantom lines for better understandings. First, impact of the bumper face 18 on the object 102 in front of the light body 55 (Fig. 6) of the fog light 33 is discussed below with reference to Fig. 13 to Fig. 15.

As shown in Figs. 13(a) and (b), the inner half 77b of the light upper part 77 and the light lower inner part 79 impact on the object 102 as the vehicle travels forwardly. Upon the impact on the object 102, an impact load F1 is applied from the front side of the vehicle body to the inner half 77b of the light upper part 77 and the light lower inner part 79. Simultaneously, the impact load F1 is applied from the front side of the vehicle body to the front portion 33a of the fig light 33. As a result, the bumper face 18 deforms rearwardly of the vehicle body, causing the inner half 77b of the light upper part 77 and the light lower inner part 79 to move rearwardly of the vehicle body, as shown by an arrow A, and the fog light 33 to move rearwardly of the vehicle body, as shown by the arrow A.

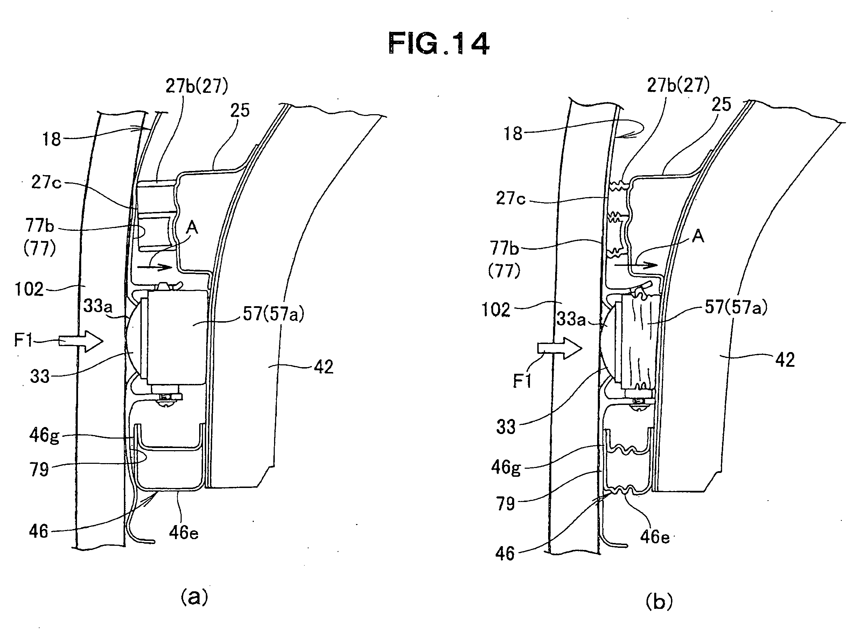

As shown in Fig. 14(a), the inner half 77b of the light upper part 77 abuts on the front side 27c of the upper impact absorption member 27 (the lateral inner half 27b). The light lower inner part 79 generally simultaneously abuts on the front surface 46g of the lower bulk member 46 (the support part 46e). Simultaneously, the fog light 33 moves rearwardly of the vehicle body, causing the overlapping part 57a of the fog light 33 (the lighting garnish 57) to abut on the front curved section 42. The rearward deformation of the bumper face 18 absorbs one part of the impact load F1.

The abutment of the inner half 77b of the light upper part 77 on the front side 27c of the upper impact absorption member 27 (the lateral inner half 27b) closes the opening defined by the upper impact absorption member 27, such that the upper impact absorption member 27 (the lateral inner half 27b) prevents deformation of the inner half 77b of the light upper part 77 to thereby keep the inner half 77b generally flat. The inner half 77b of the light upper part 77 and the light lower inner part 79 are kept flat to be generally flush with the front portion 33a of the fog light 33.

Since the inner half 77b of the light upper part 77, the light lower inner part 79 and the front portion 33a of the fog light 33 are kept generally flush with one another, the upper impact absorption member 27 (the lateral inner half 27b) and the front surface 46g of the support part 46e bear the impact load F1, such that the fog light 33 does not protrude beyond the upper impact absorption member 27 (the lateral inner half 27b) and the front surface 46g of the support part 46e. As a result, the upper impact absorption member 27 (the lateral inner half 27b), the front surface 46g of the support part 46e and the fog light 33 can better protect the object 102 by supporting the object 102 without bending the object 102.

Since the inner half 77b of the light upper part 77 and the light lower inner part 79 are kept flat to be generally flush with the front portion 33a of the fog light 33, the impact load F1 can be dispersed to the inner half 77b of the light upper part 77, the light lower inner part 79 and the front portion 33a of the fog light 33 more successfully, thereby dispersing the impact to be transmitted to the object 102. As a result, the object 102 can be protected from the impact.

As shown in Fig. 14(b), the abutment of the inner half 77b of the light upper part 77 on the front side 27c of the upper impact absorption member 27 (the lateral inner half 27b) compresses the lateral inner half 27b. The abutment of the light lower inner part 79 on the front surface 46g of the lower bulk member 46 (the support part 46e) compresses the support part 46e. The abutment of the overlapping part 57a of the fog light 33 on the front curved section 42 compresses the lighting garnish 57.

The compression of the lateral inner half 27b of the upper impact absorption member 27, the support part 46e and the lighting garnish 57 absorbs the remaining part of the impact load F1. As a result, an impact load f1 dispersed to each of the lateral inner half 27b of the upper impact absorption member 27, the light lower inner part 79 and the front portion 33a of the fog light 33 is further reduced to protect the object 102 from the impact more successfully.

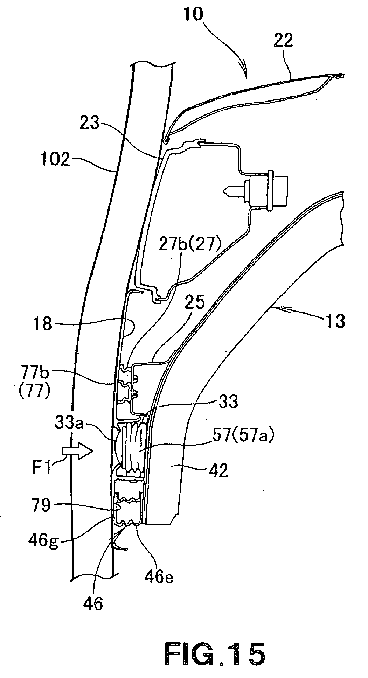

As shown in Fig. 15, the inner half 77b of the light upper part 77 and the light lower inner part 79 are kept flat to be generally flush with the front portion 33a of the fog light 33, such that the upper impact absorption member 27 (the lateral inner half 27b), the support part 46e and the fog light 33 support the object 102 without bending the object 102. As a result, the object 102 can be better protected.

Next, an impact of the bumper face 18 on the object 102 in front of the overlapping part 57a of the fog light 33 is discussed below with reference to Fig. 16 to Fig. 18.

As shown in Figs. 16(a) and (b), the outer half 77a of the light upper part 77 and the light lower outer part 78 of the bumper face 18 impact on the object 102 as the vehicle travels forwardly. Upon the impact on the object 102, an impact load F2 is applied from the front side of the vehicle body to the outer half 77a of the light upper part 77 and the light lower outer part 78.

As a result, the bumper face 18 deforms rearwardly of the vehicle body, causing the outer half 77a of the light upper part 77 and the light lower outer part 78 to move rearwardly of the vehicle body, as shown by an arrow A, and the fog light 33 to move rearwardly of the vehicle body, as shown by the arrow A.

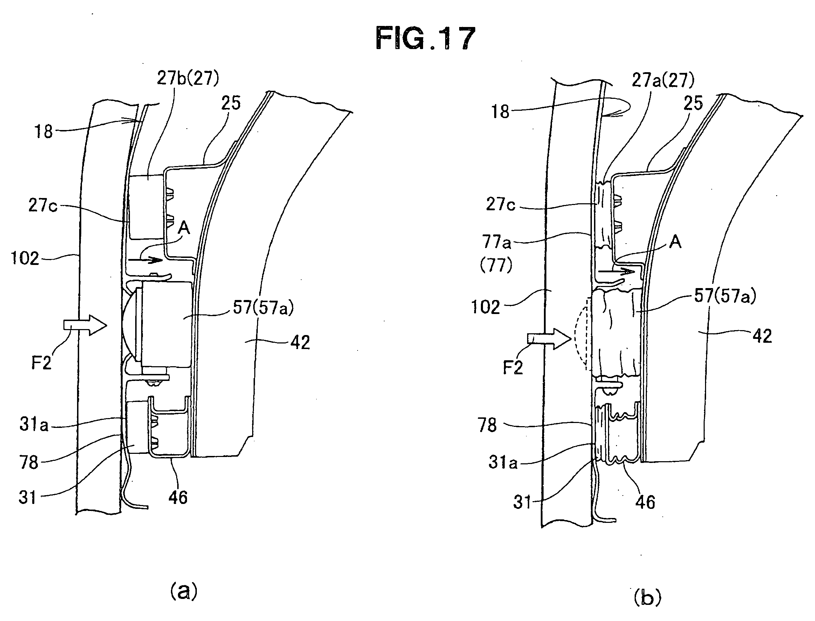

As shown in Figs. 17(a) and (b), the outer half 77a of the light upper part 77 abuts on the front side 27c of the upper impact absorption member 27 (the lateral outer half 27b). The light lower outer part 78 generally simultaneously abuts on the front side 31a of the lower impact absorption member 31. Simultaneously, the fog light 33 moves rearwardly of the vehicle body, causing the overlapping part 57a of the fog light 33 (the lighting garnish 57) to abut on the front curved section 42. The rearward deformation of the bumper face 18 absorbs one part of the impact load F2.

The abutment of the outer half 77a of the light upper part 77 on the front side 27c of the upper impact absorption member 27 (the lateral outer half 27a) closes the opening of the upper impact absorption member 27, such that the upper impact absorption member 27 (the lateral outer half 27a) prevents deformation of the outer half 77a of the light upper part 77 to thereby keep the outer half 77a generally flat.

The abutment of the light lower outer part 78 on the front side 31a of the lower impact absorption member 31 closes the opening of the lower impact absorption member 31, such that the lower impact absorption member 31 prevents deformation of the light outer part 78 to thereby keep the light outer part 78 generally flat. The outer half 77a of the light upper part 77 and the light lower outer part 78 are kept flat to be generally flush with one another.

Since the outer half 77a of the light outer part 77 and the light lower outer part 78 are kept generally flush with one another, the upper impact absorption member 27 (the lateral outer half 27a) and the lower impact absorption member 31 bear the impact load F2. That is, the object 102 is supported by a wide range of flat surfaces of the upper impact absorption member 27 (the lateral outer half 27a) and the lower impact absorption member 31. The object 102 is thus better protected without being bent.

Since the outer half 77a of the light upper part 77 and the light lower outer part 78 are kept flat to be generally flush with one another, the impact load F2 can be dispersed to the outer half 77a of the light upper part 77 and the light lower outer part 78 more successfully, thereby dispersing the impact to be transmitted to the object 102. As a result, the object 102 can be protected from the impact.

As shown in Fig. 17(b), the abutment of the outer half 77a of the light upper part 77 on the front side 27c of the upper impact absorption member 27 (the lateral outer half 27a) compresses the lateral outer half 27a. The abutment of the light lower outer part 78 on the front side 31a of the lower impact absorption member 31 compresses the impact absorption member 31.

As the upper impact absorption member 27 (the lateral outer half 27a) and the lower impact absorption member 31 begin to be compressed, the bumper face 18 continues to move in the direction of the arrow A toward the rear of the vehicle body. As a result, the garnish part 74 (Fig. 2) of the bumper face 18 abuts on the overlapping part 57a of the fog light 33.

As the garnish part 74 of the bumper face 18 abuts on the overlapping part 57a of the fog light 33, the outer half 77a of the light upper part 77, the light lower outer part 78 and the garnish part 74 are kept flat to be generally flush with one another. The abutment of the garnish part 74 of the bumper face 18 on the overlapping part 57a compresses the lighting garnish 57.

The compression of the lateral outer half 27a of the upper impact absorption member 27, the lower impact absorption member 31 and the lighting garnish 57 absorbs the remaining part of the impact load F2. The remaining part of the impact load F2 is dispersed over a wide range defined by the outer half 77a of the light upper part 77, the light lower outer part 78 and the garnish part 74. The dispersion of the remaining part of the impact load F2 over the wide range protects the object 102 from the impact more successfully.

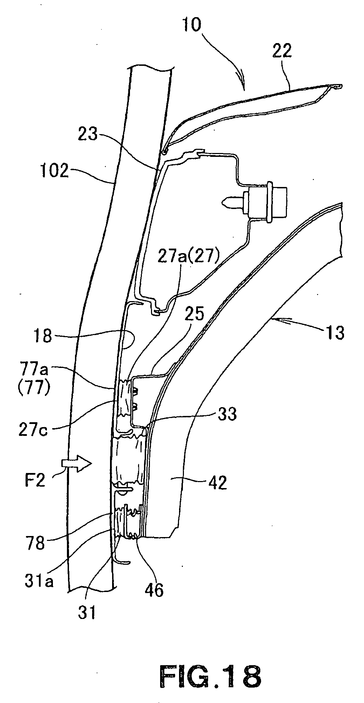

As shown in Fig. 18, the outer half 77a of the light upper part 77, the light lower outer part 78 and the garnish part 74 (Fig. 2) are kept flat to be generally flush with one another, such that the upper impact absorption member 27 (the lateral outer half 27a), the lower impact absorption member 31 and the garnish part 74 (the overlapping part 57a (Fig. 17(a))) support the object 102 without bending the object 102. As a result, the object 102 can be better protected.

The vehicle body front structure of the present invention is not limited to that discussed in the embodiment but may be modified or improved. For example, although the lighting portion disposed in the bumper face 18 has been discussed as the fog light 33 in the embodiment, the lighting portion may be other members such as a blinker.

Although the support part 46e of the lower bulk member 46 has been discussed as being disposed laterally inwardly of the lower impact absorption member 31 in an adjacent relationship therewith in the embodiment, the lower impact absorption member 31 may be removed and the support part 46e of the lower bulk member 46 may extend laterally to a location of the lower impact absorption member 46. The removal of the lower impact absorption member 31 reduces the number of parts and thus the number of steps of assemblage.

Although the fog light 33 is disposed on the side of the back surface 18b of the bumper face 18 with the lug 34 and the screw 35, the fog light 33 may be disposed on the bumper face 18 with another means such as engagement prongs.

The vehicle body front part 10, the left and right front side frames 12, the left and right front upper members 13, the front bulkhead 15, the bumper face 18, the front connection portion 25, the upper impact absorption member 27, the lower impact absorption member 31, the fog light 33, the front curved section 42, the lower bulk member 46, the lighting garnish 57, the overlapping part 57a and the garnish ribs 64 are not limited to those discussed in the embodiment but may be appropriately modified.

### INDUSTRIAL APPLICABILITY

The present invention is suited for an automobile having left and right front side frames, left and right front upper members, and a bumper face provided to the left and right front side frames.

### Reference Signs List:

10... a vehicle body front part
12...left and right front side frames (a pair of front side frames)
12a...front end portions of the left and right front side frames
13...left and right front upper members (a pair of front upper members)
15... a front bulkhead
18... a bumper face
25... a front connection portion
27...an upper impact absorption member
27a...a lateral outer half
27b...a lateral inner half
27c... a front side (facing the bumper face) of the upper impact absorption member
31... a lower impact absorption member
31a...a front side of the lower impact absorption member
33...a fog light (lighting poriton)
42... a front curved section
42a... a lower end portion of the front curved section
46... a lower bulk member
46e... a support part
46g... a front surface of the support part
57... a lighting garnish
57a...an overlapping part
64... a garnish rib
66... a lighting gap
67... an upper gap
68... a lower outer gap (lower gap)
69... a lower inner gap (lower gap)
81, 91... sidewall portions
82, 92...bottom portions
F1, F2...impact loads
L2, L3, L4, L5...distances extending longitudinally of the vehicle

## Claims

1. A vehicle body front structure (10) having a pair of front side frames (12, 12) disposed on left and right sides of a front part of a vehicle and extending longitudinally of a vehicle body, a pair of front upper members (13, 13) disposed laterally outwardly of the front side frames, a generally rectangular front bulkhead (15) disposed on front end portions (12a, 12a) of the front side frames, and a bumper face (18) disposed forwardly of the front bulkhead, the front upper members having front curved sections (42, 42) extending downwardly and forwardly convexly curved, the front curved sections defining front parts of the front upper members, the front curved sections having lower end portions (42a, 42a) connected to a lower bulk member (46) extending laterally of the vehicle, the lower bulk member defining a lower part of the front bulkhead, the structure comprising:
a front connection portion (25) extending laterally of the vehicle body and interconnecting each of the front curved sections and each of the front end portions of the front side frames;
a lighting portion (33);
an upper impact absorption member (27) located above the lighting portion and disposed on the front connection portion, the upper impact absorption member being compressively deformable due to an impact load (F1; F2) applied from a front side of the vehicle body; and
a lower impact absorption member (31) located below the lighting portion and disposed on the lower bulk member, the lower impact absorption member being compressively deformable due to the impact load (F1; F2) applied from the front side of the vehicle body,
the front bulkhead (15) comprises: an upper bulk member (45) located above the front side frames (12, 12); a lower bulk member (46) located below the front side frames (12, 12); and left and right side stays (44, 44) interconnecting the upper bulk member (45) and the lower bulk member (46); and
the front connection portion (25) is located above the lightning portion (33), and the lower bulk member (46) is located below the lightning portion 33,
**characterized in that**
the lightning portion (33) is disposed in the bumper face and between the front connection portion and the lower bulk member and is located forwardly of each of the front curved sections,
such that the upper and lower parts of the bumper face located above and below the lighting portion stop at a position generally flush with the lighting portion due to the impact load applied from the front side of the vehicle body.

2. The structure of claim 1, wherein the upper impact absorption member and the lower impact absorption member are compressively deformable in the same manner as a lighting garnish (57) defining a contour of the lighting portion, due to the impact load applied from the front side of the vehicle body, the upper impact absorption member and the lower impact absorption member are box-shaped and made of the same kind of resin as the lighting garnish.

3. The structure of claim 1, wherein the upper impact absorption member is disposed between the front connection portion and the bumper face, and the lower impact absorption member is disposed between the lower bulk member and the bumper face.

4. The structure of claim 2, wherein the upper impact absorption member and the bumper face define an upper gap (67) therebetween, the lower impact absorption member and the bumper face define a lower gap (68) therebetween, and the lighting garnish and each of the front curved sections define a lighting gap (66) therebetween for allowing the lighting portion to move rearwardly of the vehicle body, and wherein the lighting gap extends longitudinally of the vehicle body by the same distance (L2) as the upper gap and the lower gap.

5. The structure of claim 1, wherein each of the upper impact absorption member and the lower impact absorption member is box-shaped and has an open side (27c; 31 a) facing the bumper face, each of the upper impact absorption member and the lower impact absorption member comprising a generally rectangular sidewall portion (81; 91) and a bottom portion (82; 92) disposed opposite the bumper face, and wherein, when the bumper face deforms due to the impact load applied from the front side of the vehicle body, the deformed bumper face abuts each of the upper impact absorption member and the lower impact absorption member to close the open side of each of the upper impact absorption member and the lower impact absorption member.

6. The structure of claim 2, wherein the lighting garnish has an overlapping part (57a) aligned with each of the front curved sections longitudinally of the vehicle body, the lighting garnish having garnish ribs (64) in the overlapping part.

7. The structure of claim 1, wherein the upper impact absorption member has a lateral outer half (27a) and the lower impact absorption member is disposed below the lateral outer half of the upper impact absorption member, wherein the upper impact absorption member has a lateral inner half (27b) and the lower bulk member includes a support part (46e) located adjacent the lower impact absorption member and below the lateral inner half, and wherein the support part has a front surface (46g) and the lower impact absorption member has a front surface (31a), the front surface of the support part and the front surface of the lower impact absorption member being arranged in generally the same location longitudinally of the vehicle body.

## Patentansprüche

1. Fahrzeugkörperfrontstruktur (10) mit einem Paar von vorderen Seitenrahmen (12, 12), welche auf linken und rechten Seiten von einem vorderen Teil von einem Fahrzeug angeordnet sind und sich in Längsrichtung von einem Fahrzeugkörper erstrecken, einem Paar von vorderen oberen Elementen (13, 13), welche lateral auswärts von den vorderen Seitenrahmen angeordnet sind, einer allgemein rechteckförmigen vorderen Trennwand (15), welche an vorderen Endabschnitten (12a, 12a) von den vorderen Seitenrahmen angeordnet ist, und einer Stoßstangenfläche (18), welche vorwärts von der vorderen Trennwand angeordnet ist, wobei die vorderen oberen Elemente vordere gekrümmte Abschnitte (42, 42) haben, welche sich nach unten erstrecken und nach vorne hin konvex gekrümmt sind, wobei die vorderen gekrümmten Abschnitte fordere Teile von den vorderen oberen Elementen definieren, wobei die vorderen gekrümmten Abschnitte untere Endabschnitte (42a, 42a) haben, welche mit einem unteren Trennwandelement (46) verbunden sind, welches sich lateral von dem Fahrzeug erstreckt, wobei das untere Trennwandelement einen unteren Teil von der vorderen Trennwand definiert, wobei die Struktur umfasst:
einen vorderen Verbindungsabschnitt (25), welcher sich lateral von dem Fahrzeugkörper erstreckt und jeden von den vorderen gekrümmten Abschnitten und jeden von den vorderen Endabschnitten von den vorderen Seitenrahmen miteinander verbindet;
einen Beleuchtungsabschnitt (33);
ein oberes Aufprallabsorptionselement (27), welches oberhalb des Beleuchtungsabschnitts angeordnet ist und an dem vorderen Verbindungsabschnitt angeordnet ist, wobei das obere Aufprallabsorptionselement kompressionsverformbar ist aufgrund einer Stoßlast (F1; F2), welche von einer Vorderseite von dem Fahrzeugkörper ausgeübt wird; und ein unteres Aufprallabsorptionselement (31), welches unterhalb des Beleuchtungsabschnitts angeordnet ist und an dem unteren Trennwandelement angeordnet ist, wobei das untere Aufprallabsorptionselement kompressionsverformbar ist aufgrund der Stoßlast (F1; F2), welche von der Vorderseite des Fahrzeugkörpers her ausgeübt wird, wobei die vordere Trennwand (15) umfasst: ein oberes Trennwandelement (45), welches oberhalb der vorderen Seitenrahmen (12, 12) angeordnet ist; ein unteres Trennwandelement (46), welches unterhalb der vorderen Seitenrahmen (12, 12) angeordnet ist; und linke und rechte Seitenstützen (44, 44), welche das obere Trennwandelement (45) und das untere Trennwandelement (46) miteinander verbinden; und
der vordere Verbindungsabschnitt (25) oberhalb des Beleuchtungsabschnitts (33) angeordnet ist und das untere Trennwandelement (46) unterhalb des Beleuchtungsabschnitts (33) angeordnet ist,
**dadurch gekennzeichnet, dass**
der Beleuchtungsabschnitt (33) in der Stoßstangenfläche und zwischen dem vorderen Verbindungsabschnitt und dem unteren Trennwandelement angeordnet ist und vorwärts von jedem von den vorderen gekrümmten Abschnitten angeordnet ist, so dass die oberen und unteren Teile von der Stoßstangenfläche, welche oberhalb und unterhalb des Beleuchtungsabschnitts angeordnet sind, an einer Position stoppen, welche im Allgemeinen mit dem Beleuchtungsabschnitt bündig ist, aufgrund der Stoßlast, welche von der Vorderseite von dem Fahrzeugkörper ausgeübt wird.

2. Struktur nach Anspruch 1, wobei das obere Aufprallabsorptionselement und das untere Aufprallabsorptionselement kompressionsverformbar sind in derselben Weise wie ein Beleuchtungszierelement (57), welches eine Kontur von dem Beleuchtungsabschnitt definiert, aufgrund der Stoßlast, welche von der Vorderseite von dem Fahrzeugkörper ausgeübt wird, wobei das obere Aufprallabsorptionselement und das untere Aufprallabsorptionselement kastenförmig sind und in derselben Weise wie das Beleuchtungszierelement aus Harz/Kunstharz hergestellt sind.

3. Struktur nach Anspruch 1, wobei das obere Aufprallabsorptionselement zwischen dem vorderen Verbindungsabschnitt und der Stoßstangenfläche angeordnet ist und das untere Aufprallabsorptionselement zwischen dem unteren Trennwandelement und der Stoßstangenfläche angeordnet ist.

4. Struktur nach Anspruch 2, wobei das obere Aufprallabsorptionselement und die Stoßstangenfläche einen oberen Spalt (67) dazwischen definieren, das untere Aufprallabsorptionselement und die Stoßstangenfläche einen unteren Spalt (68) dazwischen definieren, und das Beleuchtungszierelement und jeder von den vorderen gekrümmten Abschnitten einen Beleuchtungsspalt (66) dazwischen definieren, um zu ermöglichen, dass sich der Beleuchtungsabschnitt rückwärts von dem Fahrzeugkörper bewegt, und wobei sich der Beleuchtungsspalt in Längsrichtung des Fahrzeugkörpers um denselben Abstand (L2) wie der obere Spalt und der untere Spalt erstreckt.

5. Struktur nach Anspruch 1, wobei jedes von dem oberen Aufprallabsorptionselement und dem unteren Aufprallabsorptionselement kastenförmig ist und eine offene Seite (27c; 31 a) hat, welche zu der Stoßstangenfläche weist, jedes von dem oberen Aufprallabsorptionselement und dem unteren Aufprallabsorptionselement einen im Allgemeinen rechteckförmigen Seitenwandabschnitt (81; 91) und einen Bodenabschnitt (82; 92) umfasst, welche gegenüber der Stoßstangenfläche angeordnet sind, und wobei dann, wenn die Stoßstangenfläche sich aufgrund der Stoßlast verformt, welche von der Vorderseite von dem Fahrzeugkörper her ausgeübt wird, die verformte Stoßstangenfläche an jedem von dem oberen Aufprallabsorptionselement und dem unteren Aufprallabsorptionselement anliegt, um die offene Seite von jedem von dem oberen Aufprallabsorptionselement und dem unteren Aufprallabsorptionselement zu schließen.

6. Struktur nach Anspruch 2, wobei das Beleuchtungszierelement einen überlappenden Teil (57a) hat, welcher mit jedem von den vorderen gekrümmten Abschnitten in Längsrichtung von dem Fahrzeugkörper ausgerichtet ist, wobei das Beleuchtungszierelement Zierrippen (64) in dem überlappenden Teil hat.

7. Struktur nach Anspruch 1, wobei das obere Aufprallabsorptionselement eine lateral äußere Hälfte (27a) hat und das untere Aufprallabsorptionselement unterhalb der lateral äußeren Hälfte von dem oberen Aufprallabsorptionselement angeordnet ist, wobei das obere Aufprallabsorptionselement eine lateral innere Hälfte (27b) hat und das untere Trennwandelement ein Tragteil (46e) umfasst, welches benachbart dem unteren Aufprallabsorptionselement und unterhalb der lateral inneren Hälfte angeordnet ist, und wobei der Tragteil eine vordere Fläche (46g) hat und das untere Aufprallabsorptionselement eine vordere Fläche (31 a) hat, wobei die vordere Fläche von dem Tragteil und die vordere Fläche von dem unteren Aufprallabsorptionselement in Längsrichtung des Fahrzeugkörpers im Allgemeinen an der selben Position angeordnet sind.

## Revendications

1. Structure avant de carrosserie de véhicule (10) ayant une paire de châssis latéraux avant (12, 12) disposés sur les côtés gauche et droit d'une partie avant d'un véhicule et s'étendant longitudinalement à une carrosserie de véhicule, une paire d'organes supérieurs avant (13, 13) disposés latéralement vers l'extérieur des châssis latéraux avant, une cloison avant généralement rectangulaire (15) disposée sur des portions d'extrémité avant (12a, 12a) des châssis latéraux avant, et une face de pare-chocs (18) disposée vers l'avant de la cloison avant, les organes supérieurs avant ayant des sections incurvées avant (42, 42) s'étendant vers le bas et vers l'avant incurvées de façon convexe, les sections incurvées avant définissant des parties avant des organes supérieurs avant, les sections incurvées avant ayant des portions d'extrémité inférieures (42a, 42a) raccordées à un organe de masse inférieur (46) s'étendant latéralement au véhicule, l'organe de masse inférieur définissant une partie inférieure de la cloison avant, la structure comprenant :
une portion de raccordement avant (25) s'étendant latéralement à la carrosserie de véhicule et reliant chacune des sections incurvées avant et chacune des portions d'extrémité avant des châssis latéraux avant ;
une portion d'éclairage (33) ;
un organe d'amortissement de choc supérieur (27) situé au-dessus de la portion d'éclairage et disposé sur la portion de raccordement avant, l'organe d'amortissement de choc supérieur étant déformable en compression en raison d'une charge de choc (F1 ; F2) appliquée depuis un côté avant de la carrosserie de véhicule ; et
un organe d'amortissement de choc inférieur (31) situé en dessous de la portion d'éclairage et disposé sur l'organe de masse inférieur, l'organe d'amortissement de choc inférieur étant déformable en compression en raison de la charge de choc (F1 ; F2) appliquée depuis le côté avant de la carrosserie de véhicule ;
la cloison avant (15) comprend : un organe de masse supérieur (45) situé au-dessus des châssis latéraux avant (12, 12), un organe de masse inférieur (46) situé en dessous des châssis latéraux avant (12, 12) ; et des étais latéraux gauche et droit (44, 44) reliant l'organe de masse supérieur (45) et l'organe de masse inférieur (46) ; et
la portion de raccordement avant (25) est située au-dessus de la portion d'éclairage (33), et l'organe de masse inférieur (46) est situé en dessous de la portion d'éclairage (33),
**caractérisée en ce que**
la portion d'éclairage (33) est disposée dans la face de pare-chocs et entre la portion de raccordement avant et l'organe de masse inférieur et est située vers l'avant de chacune des sections incurvées avant, de sorte que les parties supérieure et inférieure de la face de pare-chocs situées au-dessus et en dessous de la portion d'éclairage s'arrêtent à une position généralement au ras de la position d'éclairage en raison de la charge de choc appliquée depuis le côté avant de la carrosserie de véhicule.

2. Structure selon la revendication 1, dans laquelle l'organe d'amortissement de choc supérieur et l'organe d'amortissement de choc inférieur sont déformables en compression de la même manière qu'un garnissage d'éclairage (57) définissant un contour de la portion d'éclairage, en raison de la charge de choc appliquée depuis le côté avant de la carrosserie de véhicule, l'organe d'amortissement de choc supérieur et l'organe d'amortissement de choc inférieur sont en forme de boîte et réalisés dans le même type de résine que le garnissage d'éclairage.

3. Structure selon la revendication 1, dans laquelle l'organe d'amortissement de choc supérieur est disposé entre la position de raccordement avant et la face de pare-chocs, et l'organe d'amortissement de choc inférieur est disposé entre l'organe de masse inférieur et la face de pare-chocs.

4. Structure selon la revendication 2, dans laquelle l'organe d'amortissement de choc supérieur et la face de pare-chocs définissent un écartement supérieur (67) entre eux, l'organe d'amortissement de choc inférieur et la face de pare-chocs définissent un écartement inférieur (68) entre eux, et le garnissage d'éclairage et chacune des sections incurvées avant définissent un écartement d'éclairage (66) entre eux permettant de déplacer la portion d'éclairage vers l'arrière de la carrosserie de véhicule, et dans laquelle l'écartement d'éclairage s'étend longitudinalement à la carrosserie de véhicule de la même distance (L2) que l'écartement supérieur et l'écartement inférieur.

5. Structure selon la revendication 1, dans laquelle chacun de l'organe d'amortissement de choc supérieur et de l'organe d'amortissement de choc inférieur est en forme de boîte et a un côté ouvert (27c ; 31a) en regard de la face de pare-chocs, chacun de l'organe d'amortissement de choc supérieur et de l'organe d'amortissement de choc inférieur comprenant une portion de paroi latérale généralement rectangulaire (81 ; 91) et une portion de fond (82 ; 92) disposées opposées à la face de pare-chocs, et dans laquelle, lorsque la face de pare-chocs se déforme en raison de la charge de choc appliquée depuis le côté avant de la carrosserie de véhicule, la face de pare-chocs déformée est contiguë à chacun de l'organe d'amortissement de choc supérieur et de l'organe d'amortissement de choc inférieur pour fermer le côté ouvert de chacun de l'organe d'amortissement de choc supérieur et de l'organe d'amortissement de choc inférieur.

6. Structure selon la revendication 2, dans lequel le garnissage d'éclairage a une partie chevauchante (57a) alignée avec chacune des sections incurvées avant longitudinalement à la carrosserie de véhicule, le garnissage d'éclairage ayant des nervures de garnissage (64) dans la partie chevauchante.

7. Structure selon la revendication 1, dans laquelle l'organe d'amortissement de choc supérieur a une moitié externe latérale (27a) et l'organe d'amortissement de choc inférieur est disposé en dessous de la moitié externe latérale de l'organe d'amortissement de choc supérieur, dans laquelle l'organe d'amortissement de choc supérieur a une moitié interne latérale (27b) et l'organe de masse inférieur comporte une partie de support (46e) située adjacente à l'organe d'amortissement de choc inférieur et en dessous de la moitié interne latérale, et dans laquelle la partie de support a une surface avant (46g) et l'organe d'amortissement de choc inférieur a une surface avant (31a), la surface avant de la partie de support et la surface avant de l'organe d'amortissement de choc inférieur étant agencées généralement au même emplacement longitudinalement à la carrosserie de véhicule.
